(19)

Europäisches
Patentamt
European
Patent Office
Office européen
des brevets

(11) **EP 3 451 208 A1**

(12) **EUROPEAN PATENT APPLICATION**

(43) Date of publication:
**06.03.2019 Bulletin 2019/10**

(51) Int Cl.:
***G06F 17/50*** *(2006.01)*

(21) Application number: **18190054.9**

(22) Date of filing: **21.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2017 KR 20170111111**

(71) Applicant: **HS R & A Co., Ltd.
Yangsan-si, Gyeongsangnam-do
50592 (KR)**

(72) Inventors:
• **Kim, Youn Kyou**
  **50619 Yangsan-si Gyeongsangnam-do (KR)**
• **Choi, Jae Hyeok**
  **50634 Yangsan-si Gyeongsangnam-do (KR)**
• **Kim, Guk Hyun**
  **50634 Yangsan-si Gyeongsangnam-do (KR)**

(74) Representative: **Stellbrink & Partner
Patentanwälte mbB
Widenmayerstrasse 10
80538 München (DE)**

(54) **METHOD FOR INTERPRETING LAYOUT OF TUBE BY USING THREE-DIMENSIONAL COORDINATES AND RECORDING MEDIUM THEREOF**

(57)    In an embodiment, a method for interpreting a layout of a tube by using three-dimensional coordinates include receiving three 3-axis coordinate values for a cross-section of a first side end of the tube including a 3-axis coordinate value for a center point of the cross-section of the first side end of the tube; receiving three 3-axis coordinate values for a cross-section of a second side end of the tube including a 3-axis coordinate value for a center point of the cross-section of the second side end of the tube; calculating a displacement between the center points of the cross-sections of the first and second side ends of the tube and a rotation vector for the cross-sections of the first and second side ends of the tube, based on the received 3-axis coordinate values for the cross-sections of the first and second side ends of the tube; and calculating a distance and a rotation angle between the cross-sections of the first and second side ends of the tube, based on the calculated displacement and the calculated rotation vector. Other various embodiments are possible.

FIG. 1

**Description**

## TECHNICAL FIELD

The present disclosure relates generally to a method for interpreting a layout of a tube by using three-dimensional coordinates and to a recording medium thereof. More particularly, various embodiments of the present disclosure relate to a method for calculating a distance and rotation angle between cross-sections of both side ends of a tube and calculating physical properties such as stress of the tube by using specific coordinate values with respect to the cross-sections in a three-dimensional space, and to a computer-readable recording medium having a program executing the method.

## BACKGROUND

With the recent growth of technologies, simulation programs capable of representing the shape of a product by a three-dimensional graphic model have been developed and released. In addition, such simulation programs can be installed and executed in a variety of electronic devices.

A typical simulation program can generate a three-dimensional graphic model for a product in response to a user input about various variables (e.g., length, width, height, etc.) associated with the shape of the product. Based on the generated graphic model, the user can comprehend the shape of the product.

Such a typical simulation program causes, however, inconvenience in usage because a user should determine and enter all the required variables. Further, if the product has a complicated structure, it may be difficult for the user to enter all the variables correctly. In addition, a typical simulation program merely has the ability to simply represent the shape of the product, so that the user can only comprehend the shape of the product but cannot know the physical properties of the product itself.

## SUMMARY

According to various embodiments of the present disclosure, a method for interpreting a layout of a tube by using three-dimensional coordinates may comprise receiving three 3-axis coordinate values for a cross-section of a first side end of the tube including a 3-axis coordinate value for a center point of the cross-section of the first side end of the tube; receiving three 3-axis coordinate values for a cross-section of a second side end of the tube including a 3-axis coordinate value for a center point of the cross-section of the second side end of the tube; calculating a displacement between the center points of the cross-sections of the first and second side ends of the tube and a rotation vector for the cross-sections of the first and second side ends of the tube, based on the received 3-axis coordinate values for the cross-sections of the first and second side ends of the tube; and calculating a distance and a rotation angle between the cross-sections of the first and second side ends of the tube, based on the calculated displacement and the calculated rotation vector.

In addition, according to various embodiments of the present disclosure, a non-transitory computer-readable recording medium storing commands configured to, when executed by at least one processor of an electronic device, perform at least one operation that may comprise receiving three 3-axis coordinate values for a cross-section of a first side end of the tube including a 3-axis coordinate value for a center point of the cross-section of the first side end of the tube; receiving three 3-axis coordinate values for a cross-section of a second side end of the tube including a 3-axis coordinate value for a center point of the cross-section of the second side end of the tube; calculating a displacement between the center points of the cross-sections of the first and second side ends of the tube and a rotation vector for the cross-sections of the first and second side ends of the tube, based on the received 3-axis coordinate values for the cross-sections of the first and second side ends of the tube; and calculating a distance and a rotation angle between the cross-sections of the first and second side ends of the tube, based on the calculated displacement and the calculated rotation vector.

According to various embodiments of the present disclosure, a processor of an electronic device can easily calculate information related to a layout of a tube located in a three-dimensional space by using coordinate values for cross-sections of both side ends of the tube, and can also provide accurately and quickly the physical properties of the tube to a user on the basis of the calculated information.

## BRIEF DESCRIPTION OF THE DRAWINGS

FIG. 1 is a flow diagram illustrating a method for interpreting a layout of a tube by using three-dimensional coordinates according to various embodiments of the present disclosure.

FIG. 2 is a flow diagram illustrating a process of calculating the displacement and rotation vector between cross-sections of both side ends of a tube in a method for interpreting a layout of the tube by using three-dimensional coordinates according to various embodiments of the present disclosure.

FIG. 3 is a diagram illustrating an example of a plurality of coordinate values and related vectors in a three-dimensional space according to various embodiments of the present disclosure.

FIG. 4 is a diagram illustrating a matrix associated with the Rodrigues formula used in a method for interpreting a layout of a tube by using three-dimensional coordinates according to various embodiments of the present disclosure.

FIG. 5 is a flow diagram illustrating a method for interpreting a layout of a tube by using three-dimensional coordinates according to various embodiments of the present disclosure.

FIGS. 6A and 6B are views showing examples of a screen for displaying a layout of a tube and information about physical properties of the tube according to various embodiments of the present disclosure.

## DETAILED DESCRIPTION

The following description is made with reference to the accompanying drawings. It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

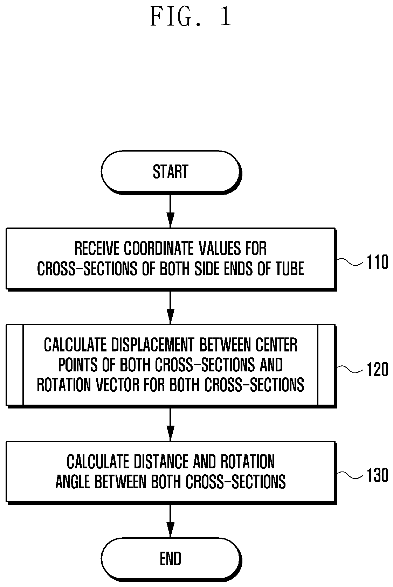

FIG. 1 is a flow diagram illustrating a method for interpreting a layout of a tube by using three-dimensional coordinates according to various embodiments of the present disclosure.

According to various embodiments, at operation 110, a processor of an electronic device may receive a user input of entering a plurality of coordinate values for cross-sections of both side ends of a tube.

For example, the processor may receive three 3-axis coordinate values for a cross-section of one side end (i.e., a first side end) of the tube including a 3-axis coordinate value for a center point of the cross-section of one side end of the tube. In this disclosure, the 3-axis coordinate value may refer to a coordinate value determined based on three reference axes (e.g., x-axis, y-axis, and z-axis) in a three-dimensional space. For example, the processor may receive (0, 0, 0) as the 3-axis coordinate value for the center point of the cross-section of one side end of the tube, and also receive (6.53, 1.50, 0) and (-1.50, 6.53, 0) as two 3-axis coordinate values for non-center points of the cross-section of one side end of the tube.

Similarly, for example, the processor may also receive three 3-axis coordinate values for a cross-section of the other side end (i.e., a second side end) of the tube including a 3-axis coordinate value for a center point of the cross-section of the other side end of the tube. For example, the processor may receive (11.10, -58.77, 16.16) as the 3-axis coordinate value for the center point of the cross-section of the other side end of the tube, and also receive (17.71, -57.71, 16.27) and (10.20, -52.89, 13.09) as two 3-axis coordinate values for non-center points of the cross-section of the other side end of the tube.

In this disclosure, for convenience of explanation, the 3-axis coordinate value for the center point of the cross-section of one side end of the tube is referred to as a first coordinate value, and two 3-axis coordinate values for non-center points of the cross-section of one side end of the tube are referred to as a second coordinate value and a third coordinate value. Similarly, the 3-axis coordinate value for the center point of the cross-section of the other side end of the tube is referred to as a fourth coordinate value, and two 3-axis coordinate values for non-center points of the cross-section of the other side end of the tube are referred to as a fifth coordinate value and a sixth coordinate value.

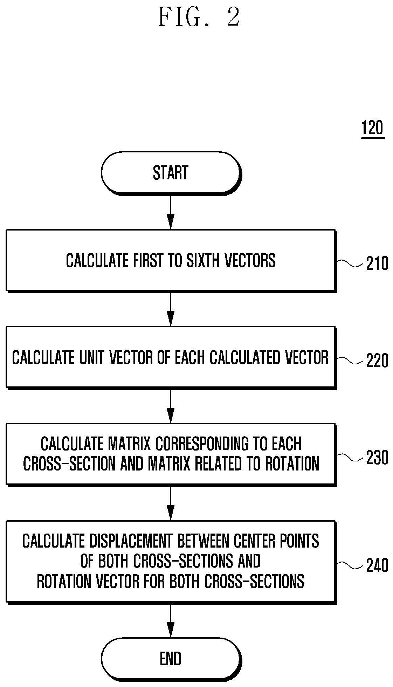

According to various embodiments, at operation 120, the processor may calculate a displacement between the center point of the cross-section of one side end of the tube and the center point of the cross-section of the other side end of the tube, based on the plurality of coordinate values for the cross-sections of both side ends of the tube received at operation 110. Further, at operation 120, the processor may calculate a rotation vector for the cross-sections of both side ends of the tube. In this disclosure, the rotation vector may refer to a vector corresponding to a certain axis (hereinafter, referred to as "a rotation reference axis") that becomes the basis of rotation when a first plane is rotated on the basis of the rotation reference axis and thereby coincides with a second plane. A detailed process of calculating the displacement and the rotation vector according to various embodiments of the present disclosure will be described hereinafter with reference to FIG. 2.

FIG. 2 is a flow diagram illustrating a process of calculating the displacement and rotation vector between cross-sections of both side ends of a tube in a method for interpreting a layout of the tube by using three-dimensional coordinates according to various embodiments of the present disclosure.

Referring to FIG. 2, at operation 210, the processor may calculate vectors, based on the first to sixth coordinate values.

For example, the processor may calculate a first vector defined by a distance between the first and second coordinate values and a direction from the first coordinate value to the second coordinate value, and also calculate a second vector defined by a distance between the first and third coordinate values and a direction from the first coordinate value to the third coordinate value. Further, the processor may calculate a third vector which is a vector product, i.e., an outer product, of the first and second vectors. For example, when the first, second, and third coordinate values are (0, 0, 0), (6.53, 1.50, 0), and (-1.50, 6.53, 0), respectively, the first vector is obtained as a coordinate value (6.53, 1.50, 0), and the second vector is obtained as a coordinate value (-1.50, 6.53, 0). In addition, the third vector is obtained as a coordinate value (0, 0, 44.89).

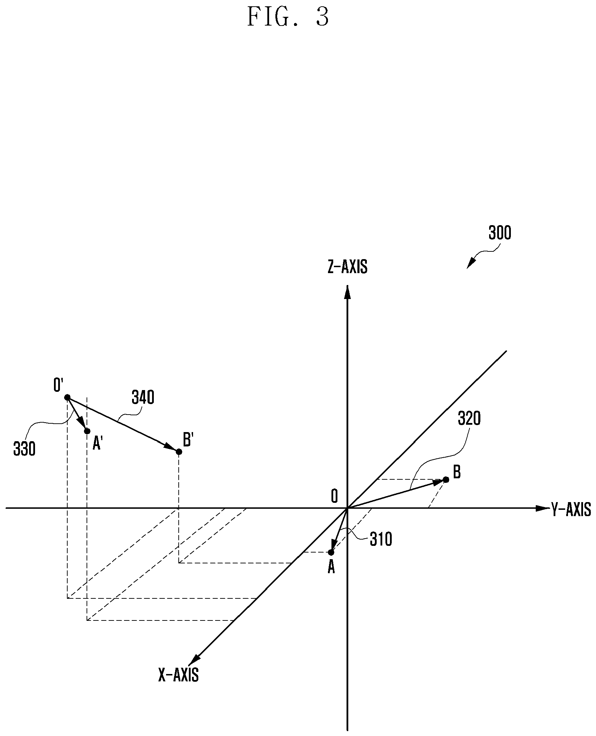

Similarly, the processor may calculate a fourth vector defined by a distance between the fourth and fifth coordinate values and a direction from the fourth coordinate value to the fifth coordinate value, and also calculate a fifth vector defined by a distance between the fourth and sixth coordinate values and a direction from the fourth coordinate value to the sixth coordinate value. Further, the processor may calculate a sixth vector which is a vector product, i.e., an outer product, of the fourth and fifth vectors. For example, when the fourth, fifth, and sixth coordinate values are (11.10, -58.77, 16.16), (17.71, -57.71, 16.27), and (10.20, -52.89, 13.09), respectively, the fourth vector is obtained as a coordinate value (6.61, 1.06, 0.11), and the fifth vector is obtained as a coordinate value (-0.90, 5.89, -3.07). In addition, the sixth vector is obtained as a coordinate value (-3.90, 20.19, 39.89). In this regard, description will be made with further reference to FIG. 3.

FIG. 3 is a diagram illustrating an example of a plurality of coordinate values and related vectors in a three-dimensional space according to various embodiments of the present disclosure.

As shown in FIG. 3, in a three-dimensional space based on three reference axes (i.e., x axis, y axis, and z axis), three points O, A, and B form a first plane, and three points O', A', and B' form a second plane. Three points O, A, and B located on the first plane correspond to three points O', A', and B' located on the second plane, respectively.

When three points O, A, and B correspond to the first, second, and third coordinate values, respectively, it can be seen that the first vector is represented as $\overrightarrow{OA}$ 310 and the second vector is represented as $\overrightarrow{OB}$ 320.

Similarly, when three points O', A', and B' correspond to the fourth, fifth, and sixth coordinate values, respectively, it can be seen that the fourth vector is represented as $\overrightarrow{O'A'}$ 330 and the fifth vector is represented as $\overrightarrow{O'B'}$ 340.

Returning to FIG. 2, at operation 220, the processor may calculate a unit vector of each vector calculated at operation 210. In addition, at operation 230, the processor may calculate a matrix corresponding to a cross-section of one side end of the tube, a matrix corresponding to a cross-section of the other side end of the tube, and a matrix related to rotation. In this disclosure, the rotation-related matrix may refer to a matrix related to the above-mentioned rotation vector corresponding to the rotation reference axis when the first plane is rotated on the basis of the rotation reference axis and thereby coincides with the second plane.

For example, the matrix corresponding to the cross-section of one side end of the tube may be obtained from the unit vector of the first vector, the unit vector of the second vector, and the unit vector of the third vector. For example, when a coordinate value of the unit vector of the first vector is (0.97, 0.22, 0), a coordinate value of the unit vector of the second vector is (-0.22, 0.97, 0), and a coordinate value of the unit vector of the third vector is (0, 0, 1), the matrix corresponding to the cross-section of one side end of the tube may be calculated as follows.

$$\begin{pmatrix} 0.97 & -0.22 & 0 \\ 0.22 & 0.97 & 0 \\ 0 & 0 & 1 \end{pmatrix}$$

Similarly, for example, the matrix corresponding to the cross-section of the other side end of the tube may be obtained from the unit vector of the fourth vector, the unit vector of the fifth vector, and the unit vector of the sixth vector. For example, when a coordinate value of the unit vector of the fourth vector is (0.99, 0.16, 0.02), a coordinate value of the unit vector of the fifth vector is (-0.13, 0.88, -0.46), and a coordinate value of the unit vector of the sixth vector is (-0.09, 0.45, 0.89), the matrix corresponding to the cross-section of the other side end of the tube may be calculated as follows.

$$\begin{pmatrix} 0.99 & -0.13 & -0.09 \\ 0.16 & 0.88 & 0.45 \\ 0.02 & -0.46 & 0.89 \end{pmatrix}$$

In addition, for example, the matrix related to rotation may be obtained, based on the above matrices corresponding to the cross-sections of both side ends of the tube. For example, if the matrix corresponding to the cross-section of the other side end of the tube is obtained by multiplying the matrix corresponding to the cross-section of one side end of the tube by the rotation-related matrix, the rotation-related matrix may be obtained by multiplying an inverse matrix of the matrix corresponding to the cross-section of one side end of the tube by the matrix corresponding to the cross-section of the other side end of the tube.

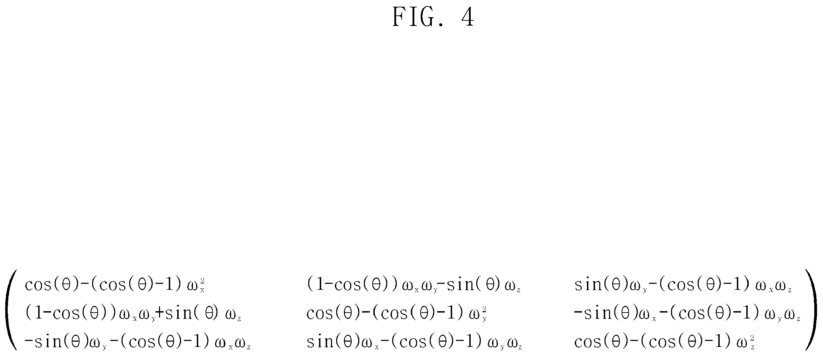

Meanwhile, if the unit vector corresponding to the rotation reference axis is $(w_x, w_y, w_z)$, and if a rotation angle is θ, the rotation-related matrix may be expressed using the Rodrigues' rotation formula. In this regard, description will be made with reference to FIG. 4.

FIG. 4 is a diagram illustrating a matrix associated with the Rodrigues formula used in a method for interpreting a layout of a tube by using three-dimensional coordinates according to various embodiments of the present disclosure.

For example, when the unit vector corresponding to the rotation reference axis is $(w_x, w_y, w_z)$, and when the rotation angle is $\theta$, the rotation-related matrix may be represented as a matrix shown in FIG. 4.

The rotation angle may mean, for example, the degree to which the first plane rotates with respect to a certain axis, and the unit of the rotation angle may be degree, radian, or the like. In this embodiment, a rotation direction is assumed to be counterclockwise, for example.

Returning to FIG. 2, at operation 240, the processor may calculate the displacement between the center point of the cross-section of one side end of the tube and the center point of the cross-section of the other side end of the tube. For example, the displacement from the 3-axis coordinate value (0, 0, 0) of the center point of the cross-section of one side end of the tube to the 3-axis coordinate value (11.10, -58.77, 16.16) of the center point of the cross-section of the other side end of the tube may be calculated as (11.10, -58.77, 16.16).

In addition, at operation 240, the processor may calculate the rotation vector between the cross-section of one side end of the tube and the cross-section of the other side end of the tube by comparing the rotation-related matrix using the Rodrigues' rotation formula with the rotation-related matrix obtained by multiplying an inverse matrix of the matrix corresponding to the cross-section of one side end of the tube by the matrix corresponding to the cross-section of the other side end of the tube.

For example, by multiplying an inverse matrix of the matrix corresponding to the cross-section of one side end of the tube by the matrix corresponding to the cross-section of the other side end of the tube, the rotation-related matrix may be obtained as follows.

$$\begin{pmatrix} 0.99 & -0.09 & -0.09 \\ -0.04 & 0.89 & 0.45 \\ 0.12 & -0.44 & 0.89 \end{pmatrix}$$

In this case, the rotation-related matrix obtained by multiplying an inverse matrix of the matrix corresponding to the cross-section of one side end of the tube by the matrix corresponding to the cross-section of the other side end of the tube has the same components as those of the rotation-related matrix using the Rodrigues' rotation formula. Based on this, the processor may calculate the unit vector corresponding to the rotation reference axis and the rotation angle. For example, if the [1, 1, 1] component of the rotation-related matrix obtained by multiplying an inverse matrix of the matrix corresponding to the cross-section of one side end of the tube by the matrix corresponding to the cross-section of the other side end of the tube is 0.99, and if the [1, 1, 1] component of the rotation-related matrix using the Rodrigues' rotation formula is $\cos\theta - (\cos\theta - 1)w_x^2$, both component values are equal to each other. Thus, the unit vector $(w_x, w_y, w_z)$ corresponding to the rotation reference axis may be calculated as (-0.96, -0.22, -0.14), and the rotation angle $\theta$ may be calculated as 27.61 degrees, i.e., 0.48 rad.

Then, based on the calculated unit vector and rotation angle, the rotation vector between the cross-sections of both side ends of the tube may be calculated. In the above example, when the unit vector is calculated as (-0.96, -0.22, -0.14) and the rotation angle is calculated as 0.48 rad, the rotation vector may be calculated as (-0.465, -0.107, -0.068) by multiplying the unit vector and the rotation angle.

Returning to FIG. 1, at operation 130, the processor may calculate a distance and a rotation angle between the cross-section of one side end of the tube and the cross-section of the other side end of the tube.

For example, the displacement between the center point of the cross-section of one side end of the tube and the center point of the cross-section of the other side end of the tube, calculated at operation 120 (especially at operation 240), may be determined as the distance between the cross-sections of both side ends of the tube. For example, the distance between the cross-sections of both side ends of the tube may be obtained as (11.10, -58.77, 16.16) which is the displacement from the 3-axis coordinate value (0, 0, 0) of the center point of the cross-section of one side end of the tube to the 3-axis coordinate value (11.10, -58.77, 16.16) of the center point of the cross-section of the other side end of the tube.

Alternatively, the displacement between a non-center point of the cross-section of one side end of the tube and a corresponding non-center point of the cross-section of the other side end of the tube may be determined as the distance between the cross-sections of both side ends of the tube.

For example, the rotation angle between the cross-sections of both side ends of the tube may be calculated based on the rotation vector calculated at operation 120. For example, based on the rotation vector (-0.465, -0.107, -0.068) and the rotation angle 0.48 rad, calculated at operation 120 (especially at operation 240), the rotation angle between the cross-sections of both side ends of the tube may be calculated as 0.48 rad, i.e., 27.61 degrees.

Thus, according to various embodiments of the present disclosure, when the user determines only the coordinate values regarding the cross-sections of both side ends of the tube and inputs them into the program, the processor can accurately calculate information associated with the layout of the tube.

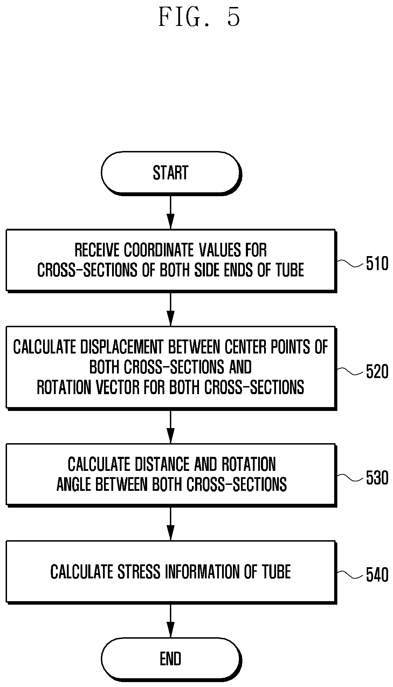

FIG. 5 is a flow diagram illustrating a method for interpreting a layout of a tube by using three-dimensional coordinates according to various embodiments of the present disclosure. The same description as the above description regarding FIGS. 1 to 4 may be omitted hereinafter.

According to various embodiments, at operation 510, a processor of an electronic device may receive a user input of entering a plurality of coordinate values for cross-sections of both side ends of a tube.

For example, the processor may receive three 3-axis coordinate values for a cross-section of one side end of the tube including a 3-axis coordinate value for a center point of the cross-section of one side end of the tube. In this disclosure, the 3-axis coordinate value may refer to a coordinate value determined based on three reference axes (e.g., x-axis, y-axis, and z-axis) in a three-dimensional space. For example, the processor may receive (0, 0, 0) as the 3-axis coordinate value for the center point of the cross-section of one side end of the tube, and also receive (6.53, 1.50, 0) and (-1.50, 6.53, 0) as two 3-axis coordinate values for non-center points of the cross-section of one side end of the tube.

Similarly, for example, the processor may also receive three 3-axis coordinate values for a cross-section of the other side end of the tube including a 3-axis coordinate value for a center point of the cross-section of the other side end of the tube. For example, the processor may receive (11.10, -58.77, 16.16) as the 3-axis coordinate value for the center point of the cross-section of the other side end of the tube, and also receive (17.71, -57.71, 16.27) and (10.20, -52.89, 13.09) as two 3-axis coordinate values for non-center points of the cross-section of the other side end of the tube.

According to various embodiments, at operation 520, the processor may calculate a displacement between the center point of the cross-section of one side end of the tube and the center point of the cross-section of the other side end of the tube, based on the plurality of coordinate values for the cross-sections of both side ends of the tube received at operation 510. Further, at operation 520, the processor may calculate a rotation vector for the cross-sections of both side ends of the tube.

According to various embodiments, at operation 530, the processor may calculate a distance and a rotation angle between the cross-section of one side end of the tube and the cross-section of the other side end of the tube.

For example, the displacement between the center point of the cross-section of one side end of the tube and the center point of the cross-section of the other side end of the tube, calculated at operation 520, may be determined as the distance between the cross-sections of both side ends of the tube. For example, the distance between the cross-sections of both side ends of the tube may be obtained as (11.10, -58.77, 16.16) which is the displacement from the 3-axis coordinate value (0, 0, 0) of the center point of the cross-section of one side end of the tube to the 3-axis coordinate value (11.10, - 58.77, 16.16) of the center point of the cross-section of the other side end of the tube.

Alternatively, the displacement between a non-center point of the cross-section of one side end of the tube and a corresponding non-center point of the cross-section of the other side end of the tube may be determined as the distance between the cross-sections of both side ends of the tube.

For example, the rotation angle between the cross-sections of both side ends of the tube may be calculated based on the rotation vector calculated at operation 520.

According to various embodiments, at operation 540, the processor may calculate information related to stress of the tube, based on the displacement and rotation angle between the cross-sections of both side ends of the tube calculated at operation 530. In this disclosure, the term stress may refer to a resistance force that occurs in an object in response to a load (i.e., an external force), such as compression, tension, flexure, or distortion, applied to the object.

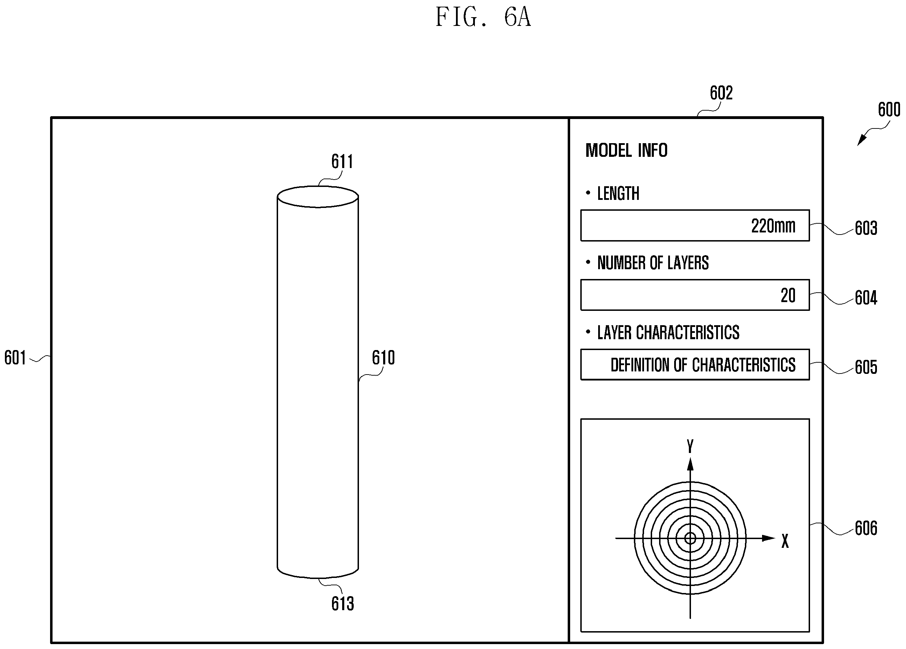

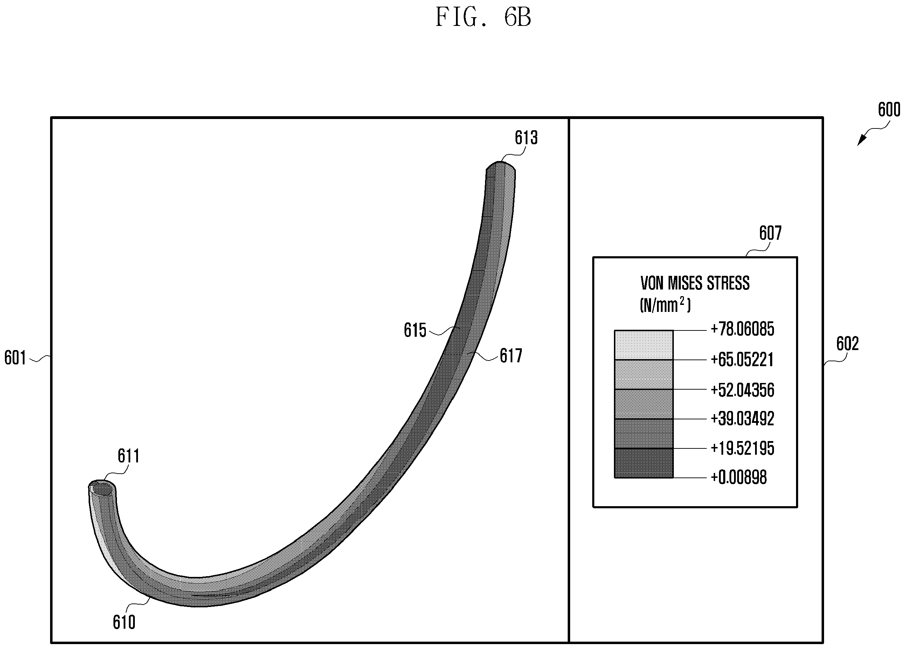

For example, the processor may receive a user input regarding information about the length of the tube, the number of layers constituting the tube, and the material of at least one layer constituting the tube. Then, based on this received information together with the result of calculation of operation 530, the processor may calculate the stress-related information on the tube. A related description will be made with reference to FIGS. 6A and 6B.

FIGS. 6A and 6B are views showing examples of a screen for displaying a layout of a tube and information about physical properties of the tube according to various embodiments of the present disclosure.

Referring to FIG. 6A, a user interface screen 600 may display the entire layout of a tube 610 and also receive a user input regarding various kinds of information about the tube 610.

For example, the user interface screen 600 may include a first area 601 for displaying the entire layout of the tube 610 and a second area 602 for receiving a user input regarding various kinds of information about the tube 610.

For example, the second area 602 of the user interface screen 600 may have a first input window 603 for receiving a user input regarding the length of the tube 610.

In addition, the second area 602 of the user interface screen 600 may have a second input window 604 for receiving a user input regarding the number of layers constituting the tube 610.

In addition, the second area 602 of the user interface screen 600 may have a third input window 605 for receiving a user input regarding characteristics of each layer of the tube 610 (e.g., information about a material of the layer). When the user selects the third input window 605, an additional screen (not shown) may be displayed for receiving the characteristics of the respective layers constituting the tube 610. The additional screen may overlap with a part of the user interface screen 600 or wholly cover the user interface screen 600.

In addition, the second area 602 of the user interface screen 600 may have a fourth input window 606 for receiving a user input regarding 3-axis coordinate values for a cross-section of one side end of the tube 610. For example, when the user selects one of both side ends 611 and 613 of the tube 610 displayed in the first area 601 of the user interface screen 600, the fourth input window 606 may be displayed in the second area 602.

When the above-described user inputs regarding information about the tube 610 are received through the second area 602 of the user interface screen 600, the layout of the tube 610 is determined and newly displayed in the first area 601 of the user interface screen 600 as shown in FIG. 6B.

Meanwhile, a resistance force generated in the tube 610 by the distortion of the tube 610 may be calculated based on the length of the tube 610 and a rotation angle between a cross-section 611 of one side end of the tube 610 and a cross-section 613 of the other side end of the tube 610. In this case, the first area 601 of the user interface screen 600 may visually display the calculated resistance force of the tube 610. For example, the calculated resistance force of the tube 610 may be the von Mises stress that indicates the maximum distortion energy at each portion of the tube under load. The von Meister stress may be also referred to as an effective or equivalent stress.

In addition, the second area 602 of the user interface screen 600 may display an index 607 of the von Mises stress. Based on this index 607, the user can know that the distortion energy at one portion 615 of the tube 610 is smaller than the distortion energy at other portion 617 of the tube 610.

As discussed above, the processor can easily calculate information related to the layout of the tube by using information about the length and material of the tube and the coordinate values for cross-sections of both side ends of the tube, and can also provide accurately and quickly the physical properties of the tube to a user on the basis of the calculated information.

It will be understood that the above-described embodiments are examples to help easy understanding of the contents of the present disclosure and do not limit the scope of the present disclosure. Accordingly, the scope of the present disclosure is defined by the appended claims, and it will be construed that all corrections and modifications derived from the meanings and scope of the following claims and the equivalent concept fall within the scope of the present disclosure.

**Claims**

1. A method for interpreting a layout of a tube by using three-dimensional coordinates, the method comprising:

   receiving three 3-axis coordinate values for a cross-section of a first side end of the tube including a 3-axis coordinate value for a center point of the cross-section of the first side end of the tube;
   receiving three 3-axis coordinate values for a cross-section of a second side end of the tube including a 3-axis coordinate value for a center point of the cross-section of the second side end of the tube;
   calculating a displacement between the center points of the cross-sections of the first and second side ends of the tube and a rotation vector for the cross-sections of the first and second side ends of the tube, based on the received 3-axis coordinate values for the cross-sections of the first and second side ends of the tube; and
   calculating a distance and a rotation angle between the cross-sections of the first and second side ends of the tube, based on the calculated displacement and the calculated rotation vector.

2. The method of claim 1, further comprising:

   calculating stress information of the tube, based on the calculated distance and the calculated rotation angle.

3. The method of claim 1, wherein the calculating the displacement and the rotation vector includes:

   calculating a first vector, based on both the 3-axis coordinate value for the center point and a first 3-axis coordinate value among the received three 3-axis coordinate values for the cross-section of the first side end of the tube;
   calculating a second vector, based on both the 3-axis coordinate value for the center point and a second 3-axis coordinate value among the received three 3-axis coordinate values for the cross-section of the first side end of the tube; and
   calculating a third vector, based on an outer product of the first and second vectors.

4. The method of claim 3, wherein the calculating the displacement and the rotation vector further includes:

   calculating a fourth vector, based on both the 3-axis coordinate value for the center point and a third 3-axis coordinate value among the received three 3-axis coordinate values for the cross-section of the second side end of the tube;
   calculating a fifth vector, based on both the 3-axis coordinate value for the center point and a fourth 3-axis coordinate value among the received three 3-axis coordinate values for the cross-section of the second side end of the tube; and

calculating a sixth vector, based on an outer product of the fourth and fifth vectors.

5. The method of claim 4, wherein the calculating the displacement and the rotation vector further includes:

calculating a unit vector of each of the first to sixth vectors; and
calculating a first matrix corresponding to the unit vectors of the first to third vectors and a second matrix corresponding to the unit vectors of the fourth to sixth vectors.

6. The method of claim 5, wherein the calculating the displacement and the rotation vector further includes:

calculating a third matrix by multiplying an inverse matrix of the first matrix by the second matrix.

7. The method of claim 6, wherein the calculating the displacement and the rotation vector further includes:

calculating the displacement between the center points of the cross-sections of the first and second side ends of the tube, based on the 3-axis coordinate value of each center point of the first and second side ends of the tube; and
calculating the rotation vector for the cross-sections of the first and second side ends of the tube by using the third matrix and a Rodrigues' rotation formula.

8. A non-transitory computer-readable recording medium storing commands configured to, when executed by at least one processor of an electronic device, perform at least one operation comprising:

receiving three 3-axis coordinate values for a cross-section of a first side end of the tube including a 3-axis coordinate value for a center point of the cross-section of the first side end of the tube;
receiving three 3-axis coordinate values for a cross-section of a second side end of the tube including a 3-axis coordinate value for a center point of the cross-section of the second side end of the tube;
calculating a displacement between the center points of the cross-sections of the first and second side ends of the tube and a rotation vector for the cross-sections of the first and second side ends of the tube, based on the received 3-axis coordinate values for the cross-sections of the first and second side ends of the tube; and

calculating a distance and a rotation angle between the cross-sections of the first and second side ends of the tube, based on the calculated displacement and the calculated rotation vector.

FIG. 1

```
                    ╭─────────────╮
                    │    START    │
                    ╰──────┬──────╯
                           │
                           ▼
        ┌──────────────────────────────────────┐
        │      RECEIVE COORDINATE VALUES FOR     │⌐╲ 110
        │  CROSS-SECTIONS OF BOTH SIDE ENDS OF TUBE │
        └──────────────────┬───────────────────┘
                           │
                           ▼
        ┌──────────────────────────────────────┐
        │  CALCULATE DISPLACEMENT BETWEEN CENTER │
        │   POINTS OF BOTH CROSS-SECTIONS AND    │⌐╲ 120
        │  ROTATION VECTOR FOR BOTH CROSS-SECTIONS │
        └──────────────────┬───────────────────┘
                           │
                           ▼
        ┌──────────────────────────────────────┐
        │     CALCULATE DISTANCE AND ROTATION    │⌐╲ 130
        │   ANGLE BETWEEN BOTH CROSS-SECTIONS    │
        └──────────────────┬───────────────────┘
                           │
                           ▼
                    ╭─────────────╮
                    │     END     │
                    ╰─────────────╯
```

# FIG. 2

<u>120</u>

```
        ┌─────────────┐
        │    START    │
        └──────┬──────┘
               │
               ▼
┌──────────────────────────────────┐
│   CALCULATE FIRST TO SIXTH VECTORS│ ～ 210
└──────────────┬───────────────────┘
               │
               ▼
┌──────────────────────────────────┐
│ CALCULATE UNIT VECTOR OF EACH     │ ～ 220
│ CALCULATED VECTOR                 │
└──────────────┬───────────────────┘
               │
               ▼
┌──────────────────────────────────┐
│ CALCULATE MATRIX CORRESPONDING    │
│ TO EACH CROSS-SECTION AND MATRIX  │ ～ 230
│ RELATED TO ROTATION               │
└──────────────┬───────────────────┘
               │
               ▼
┌──────────────────────────────────┐
│ CALCULATE DISPLACEMENT BETWEEN    │
│ CENTER POINTS OF BOTH CROSS-      │ ～ 240
│ SECTIONS AND ROTATION VECTOR FOR  │
│ BOTH CROSS-SECTIONS               │
└──────────────┬───────────────────┘
               │
               ▼
        ┌─────────────┐
        │     END     │
        └─────────────┘
```

FIG. 3

# FIG. 4

$$\begin{pmatrix} \cos(\theta)-(\cos(\theta)-1)\,\omega_x^2 & (1-\cos(\theta))\,\omega_x\omega_y-\sin(\theta)\,\omega_z & \sin(\theta)\omega_y-(\cos(\theta)-1)\,\omega_x\omega_z \\ (1-\cos(\theta))\omega_x\omega_y+\sin(\theta)\,\omega_z & \cos(\theta)-(\cos(\theta)-1)\,\omega_y^2 & -\sin(\theta)\omega_x-(\cos(\theta)-1)\,\omega_y\omega_z \\ -\sin(\theta)\omega_y-(\cos(\theta)-1)\,\omega_x\omega_z & \sin(\theta)\omega_x-(\cos(\theta)-1)\,\omega_y\omega_z & \cos(\theta)-(\cos(\theta)-1)\,\omega_z^2 \end{pmatrix}$$

# FIG. 5

START

RECEIVE COORDINATE VALUES FOR
CROSS-SECTIONS OF BOTH SIDE ENDS OF TUBE — 510

CALCULATE DISPLACEMENT BETWEEN CENTER POINTS OF
BOTH CROSS-SECTIONS AND
ROTATION VECTOR FOR BOTH CROSS-SECTIONS — 520

CALCULATE DISTANCE AND ROTATION
ANGLE BETWEEN BOTH CROSS-SECTIONS — 530

CALCULATE STRESS INFORMATION OF TUBE — 540

END

# FIG. 6A

FIG. 6B

600

613

607

601

VON MISES STRESS
(N/mm$^2$)

+78.06085

+65.05221

602

615

617

+52.04356

+39.03492

+19.52195

611

+0.00898

610

EP 3 451 208 A1

Europäisches
Patentamt

European
Patent Office

Office européen
des brevets

# EUROPEAN SEARCH REPORT

Application Number

EP 18 19 0054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHENYU OUYANG ET AL: "Interfacial debonding of pipe joints under torsion loads: a model for arbitrary nonlinear cohesive laws", INTERNATIONAL JOURNAL OF FRACTURE, KLUWER ACADEMIC PUBLISHERS, DO, vol. 155, no. 1, 8 February 2009 (2009-02-08), pages 19-31, XP019675801, ISSN: 1573-2673 * abstract * * page 20 - page 23 * * figures 1,3 * | 1-8 | INV. G06F17/50 |
| A | US 2016/283613 A1 (FERRI II ARMANDO [US]) 29 September 2016 (2016-09-29) * abstract * * paragraph [0003] * * paragraph [0020] - paragraph [0022] * | 1-8 | |
| A | LIU M S ET AL: "Numerical Simulation of Flexible Multilayered Pipe/Riser Under Torsion", STRENGTH OF MATERIALS, NEW YORK, NY, US, vol. 49, no. 1, 5 April 2017 (2017-04-05), pages 180-187, XP036209988, ISSN: 0039-2316, DOI: 10.1007/S11223-017-9856-6 [retrieved on 2017-04-05] * the whole document * | 1-8 | TECHNICAL FIELDS SEARCHED (IPC)<br><br>G06F |

The present search report has been drawn up for all claims

| Place of search | Date of completion of the search | Examiner |
|---|---|---|
| Munich | 19 December 2018 | Radev, Boyan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 18 19 0054

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2018

| Patent document cited in search report | Publication date | Patent family member(s) | Publication date |
|---|---|---|---|
| US 2016283613 A1 | 29-09-2016 | CA 2980928 A1<br>EP 3274882 A1<br>US 2016283613 A1<br>WO 2016154212 A1 | 29-09-2016<br>31-01-2018<br>29-09-2016<br>29-09-2016 |

EPO FORM P0459

For more details about this annex : see Official Journal of the European Patent Office, No. 12/82